# EUROPEAN PATENT APPLICATION

(11) **EP 2 919 369 A1**
(43) Date of publication of application: **16.09.2015**
(21) Application number: 12888125.7
(22) Date of filing: 12.12.2012
(51) Int. Cl.: H02K 21/24, H02K 16/04, H02K 1/12

(54) **ELECTROMAGNETIC GENERATOR**

(30) Priority: 06.11.2012 RU 2012147282
(71) Applicant: Esakov, Sergej Mikhailovich, St.Petersburg 198510 (RU); Esakov, Mikhail Sergeevich, St.Petersburg 191144 (RU)
(72) Inventor: VELIKO-IVANENKO, Anatolij Yurievich, St.Petersburg 198328 (RU); Esakov, Sergej Mikhailovich, St.Petersburg 198510 (RU); Esakov, Mikhail Sergeevich, St.Petersburg 191144 (RU)
(74) Representative: Gulde & Partner
(86) International application number: PCT/RU2012/001056
(87) International publication number: WO 2014/074009

(57) **Abstract**

The invention relates to the field of electrical engineering, and more particularly to low-speed electrical generators, and can be used, in particular, in wind energy installations. In the electromagnetic generator, the rotor of which comprises a disk (2) that is fastened to a shaft (1) and has an annular series of permanent magnets (3) of alternate polarity mounted equidistantly thereon, and the stator of which comprises two parallel plates (4, 5), between which stator windings are disposed on cores of electrical steel fastened to said stator plates (4, 5), the cores are in the form of two rings with projections on the mutually facing surfaces thereof, the width B of a projection constitutes half of the width C of a permanent magnet, and the projections of one of the cores are circumferentially offset from the projections of the other core by half of the width C of a permanent magnet (3). This increases the capacity of the generator and reduces fluctuations in the output voltage by providing a minimal and uniformly sized gap between the components of the stator and the rotor.

## Description

### Technical field

The invention relates to the field of electrical engineering, specifically to low-speed electrical generators, and can be used in particular in wind energy installations.

### Background art

A low-speed electromagnetic generator comprising an annular series of stator windings on iron cores made of iron sheets or compressed iron powder and a matching annular series of permanent magnets of the rotor, is known from the prior art, in particular a synchronous machine with permanent magnetization for sinusoidal voltage, wherein the windings are concentrated instead of being distributed in the slots, the cores with windings are alternated with iron cores without windings so that every second iron core has a winding, the number of clearances between the cores is different from the number of poles, wherein the number s of clearances between the cores and the number p of poles correspond to the formulas |s-p| = 2•m and s = 12•n•m, where n and m are positive integers, and wherein the machine is designed for three-phase voltage with series connection of adjacent coils in order to obtain •m such groups per phase, which can be connected either in series or in parallel, see RU 2234788 C2.

The disadvantage of said generator consists in its low energy conversion efficiency, because the windings in the annular series are positioned at a great distance from each other and no electromotive force (emf) is induced therein when the magnets are located in the clearance between the windings.

Another known electromagnetic generator includes a rotor equipped with permanent magnets and a stator that comprises two parallel plates in the form of interconnected disks with windings arranged there between; the stator comprises magnetic cores in the form of flat rings, see RU 2168062 C1.

This technical solution has the same disadvantage as the abovementioned analogous solution (see RU 2234788 C2), namely its low energy conversion efficiency, which has the same cause. In addition, when the permanent magnets of the rotor pass over the cores of stator windings, the permanent magnets and the cores of stator windings become attracted to each other (the so-called rotor sticking effect), which hinders the start of the generator and produces intense noise during its operation.

Increased energy conversion efficiency of the generator, decreased starting torque and reduced noise level during operation are achieved in an electromagnetic generator that includes a rotor equipped with permanent magnets and a stator comprising two parallel plates, between which annular windings are arranged; the rotor is formed by two parallel discs fastened to a shaft, with annular series of said permanent magnets arranged on each of said parallel discs on mutually facing surfaces thereof, said permanent magnets being arranged equidistantly in each series, and the polarity of said permanent magnets in each series alternating, while the poles of the permanent magnets in one series face the opposite poles of the permanent magnets in the other series; the annular windings of the stator are inserted in pairs one inside the other and are in the form of isosceles trapeziums, the lateral sides of which are arranged radially relative to the axis of rotation of the rotor; the sections of the annular windings in the bases of the trapeziums arch out convexly, wherein the distance *l* between the sections of annular windings in the bases of the trapeziums exceeds the width b of the annular series of permanent magnets, see RU 94083 U1.

In this device the magnetic core comprises rotor disks and permanent magnets of the rotor. However the permanent magnets of one disk are situated at a great distance from the permanent magnets of the other disk, the distance being defined by the size of stator windings. The air gap between the rows of permanent magnets presents a considerable magnetic resistance that significantly reduces the electromagnetic field intensity in the circuit, thus reducing the electromotive force induced in the stator windings and, therefore, the energy conversion efficiency of the generator.

Another electromagnetic generator is known, the rotor of which comprises a disk that is fastened to a shaft and has an annular series of permanent magnets of alternate polarity mounted equidistantly thereon, and the stator of which comprises two parallel plates, between which stator windings are disposed on U-shaped cores of electrical steel fastened to said stator plates, see RU 109349 U1.

This technical solution has been taken as a prototype of the present invention.

The disadvantage of the prototype consists in the following. In order to ensure maximum capacity of the electromagnetic generator, the gap between the cores of stator windings and the surfaces of the permanent magnets of the rotor must be minimal and uniform. However since the cores of stator windings do not constitute a single construction but rather represent separate components, each of which is fastened to corresponding stator plate independently of the other components, it is virtually impossible to guarantee the abovementioned minimal and uniform gap; the butt ends of U-shaped components must be coplanar and said plane must be parallel to corresponding surface of the annular series of permanent magnets. However, when separate cores of stator windings are used, the mounting thereof and adjustment of their position in conditions of strong interaction with permanent magnets, as well as the fact that shaft vibrations exist and that the stator is rigidly connected to the shaft, do not allow meeting said requirements. Ultimately, and also for the purpose of preventing the contact between the stator and rotor components, the gap between the cores of stator windings and the permanent magnets of the rotor has to be increased. This leads to loss of capacity, and the non-uniformity of the gap results in fluctuations in the output voltage of the generator.

### Summary of the invention

It is an object of the present invention to increase the capacity of the generator and reduce fluctuations in the output voltage thereof by providing a minimal and uniformly sized gap between the components of the stator and the rotor.

According to the invention in the electromagnetic generator, the rotor of which comprises a disk that is fastened to a shaft and has an annular series of permanent magnets of alternate polarity mounted equidistantly thereon, and the stator of which comprises two parallel plates, between which stator windings are disposed on cores of electrical steel fastened to said stator plates, the cores are in the form of two rings with projections on the mutually facing surfaces thereof, the width B of a projection constitutes half of the width C of a permanent magnet, and the projections of one of the cores are circumferentially offset from the projections of the other core by half of the width C of a permanent magnet.

The applicant has not found any sources of information containing data on technical solutions identical to the present invention, which enables to conclude that the invention conforms to the criterion "Novelty" (N).

Since the cores of the stator windings are single (whole) components, each of which is a ring with projections on the mutually facing surfaces thereof, the surfaces of said projections can be processed during one mounting of the core and a machine tool. This guarantees that the surfaces of projections are strictly coplanar, which makes it possible to ensure a minimal and uniform gap between cores of stator windings and the surfaces of permanent magnets of the rotor in the generator. Said feature produces a technical result that consists in increasing the capacity of the generator and reducing the fluctuations in the output voltage of the generator.

The applicant has not found any sources of information containing data on the influence of the features of the invention on the technical result produced by the invention. In applicant's opinion, the abovementioned new properties of the object enable to conclude that the invention conforms to the criterion "Inventive Step" (IS).

### Brief description of the drawings

The invention is further explained, by way of detailed description of examples of its embodiments, with reference to the following drawings, in which:
Figure 1 is a front view;
Figure 2 is A-A section of Figure 1;

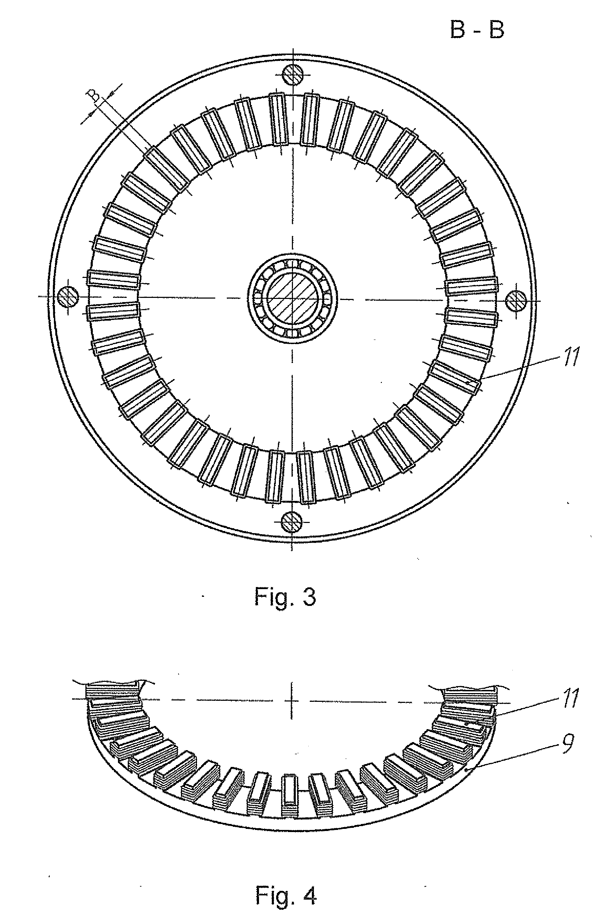

Figure 3 is B-B ( 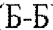 ) section of Figure 1;
Figure 4 shows a fragment of a core of the stator windings in an axonometric projection.

### Preferred embodiment

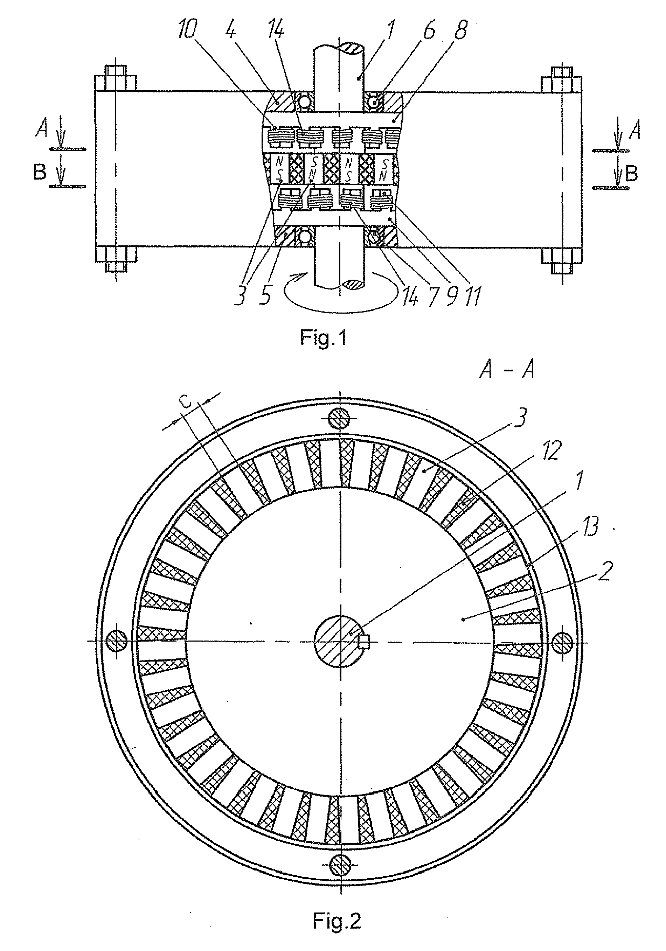

The electromagnetic generator includes a rotor that comprises a disk (2) made of duraluminum, which is fastened to a shaft (1). An annular series of rectangular permanent magnets (3) of alternate polarity is mounted on said disk (2) (see Fig.1). Said magnets (3) are mounted equidistantly relative to each other. The stator of the generator comprises two parallel plates (4, 5) made of a non-magnetic material, in particular, an aluminum alloy. Said plates (4, 5) are conjugated with the shaft (1) by means of bearings (6, 7). Cores of electrical steel are fastened to said stator plates (4, 5), said cores being in the form of two rings (8, 9) with projections (10, 11) that are made on respective mutually facing surfaces thereof, for example, by means of milling. The width B of each projection constitutes half of the width C of a permanent magnet (3). The projections (10) on ring (8) are offset from the projections (11) on ring (9) by half of the width C of a permanent magnet (3) (C/2). The clearances between the permanent magnets (3) are filled with an epoxide compound (12). The permanent magnets (3) are peripherally strapped with a binding band (13). Stator windings (14) are disposed on the cores of electrical steel. In the example that is shown in the figures the windings (14) are disposed on projections (10, 11) of the cores, also it is possible to dispose the windings (14) on the cores between the projections (10, 11), however the latter is technically more complicated.

The device functions in the following way.

When the shaft (1) rotates together with the disk (2), the poles of the permanent magnets (3) of opposite polarity alternatingly approach the surfaces of projections (10, 11), which causes the change of magnetic flux in the cores of electrical steel. As a result, electromotive force is induced in the windings (14) disposed on the projections (10, 11) of the cores or between said projections. Since the cores are single components (rings with projections) and the surfaces of the projections are processed during one mounting of the core and the machine tool, the surfaces of the projections of each core are strictly coplanar. Said fact ensures a minimal and uniform gap between the cores of stator windings and the surfaces of permanent magnets (3). Since the width B of a projection constitutes half of the width C of a permanent magnet, and the projections of one of the cores are circumferentially offset from the projections of the other core by half of the width C of a permanent magnet, it prevents the "rotor sticking" effect, which would otherwise hinder the start of the generator and produce noise during its operation. This is explained by the fact that the magnetic field of the cores fastened to the plate (4) of the stator balances the magnetic field of the cores located on the plate (5) of the stator. As a result, the total component of forces acting upon the rotor equals virtually zero regardless of the rotor position.

### Industrial applicability

The inventive device can be manufactured by means of common constructional materials and factory equipment. In applicant's opinion, this enables to conclude that the invention conforms to the criterion "Industrial Applicability" (IA).

## Claims

1. The electromagnetic generator, the rotor of which comprises a disk that is fastened to a shaft and has an annular series of permanent magnets of alternate polarity mounted equidistantly thereon, and the stator of which comprises two parallel plates, between which stator windings are disposed on cores of electrical steel fastened to said stator plates, **characterized in that** the cores are in the form of two rings with projections on the mutually facing surfaces thereof, the width B of a projection constitutes half of the width C of a permanent magnet, and the projections of one of the cores are circumferentially offset from the projections of the other core by half of the width C of a permanent magnet.
